# EUROPEAN PATENT SPECIFICATION

(11) **EP 2 006 779 B1**
(45) Date of publication and mention of the grant of the patent: **25.01.2012**
(21) Application number: 07012220.5
(22) Date of filing: 22.06.2007
(51) Int. Cl.: G06F 17/30

(54) **A method for client server communication of data across a communication network**
Verfahren zur Client-Server-Kommunikation von Daten über ein Kommunikationsnetz
Procédé de communication de données entre un client et un serveur via un réseau de communication

(43) Date of publication of application: 24.12.2008
(73) Proprietor: SIEMENS AKTIENGESELLSCHAFT, 80333 München (DE)
(72) Inventor: Gozzi, Andrea, 16155 Genova (IT)
(74) Representative: Fischer, Michael

(56) References cited:
- US-A- 6 000 000
- US-A1- 2004 267 834
- US-A1- 2005 246 389

## Description

The present invention relates to a method for client server synchronization of data across a communication network.

Industrial automation has increased in scope and refinement with time. In general, industrial automation has focused on continuous processes comprising a plurality of interacting machines. This covers in particular a broad range of manufacturing execution systems which are offered by the Siemens Corp. under its SIMATIC® product family. At least one remote client work machine close to the technical and/or logistical process is connected to at least one server by a communication network. The server hosts at least one program application which is executable at the client work machine. The program application consists of at least one data representation. The data representation is mirrored from the server across the communication network to the client work machine.

During manufacturing, these data representations are kept synchronized between the server and the client work machine in such a way, that at least one data portion which gets modified by the server is instantaneously propagated from the server to the client work machine. Depending on the bandwidth of the communication network and the volume of modified data, the data synchronization may be delayed resulting in a performance drop of the manufacturing execution system.

For this synchronization purpose, usually at least one dedicated program is provided which continuously monitors the program application at the server side for the detection of modified data between subsequent executions of the program application. Dedicated monitoring is crucial to avoid transmission of all potentially modified data and to ensure identification of all effectively modified data and extraction of at least one subset of data which is necessary for updating the mirrored data representation. The extracted subset of data is transmitted across the communication network to the remote client work machine, where it is integrated in the mirrored data representation and then executed.

The identification of effectively modified data by means of the dedicated application relies on a ternary-recursive routine which is exponentially slow and proves impractical for longer data sets, as shown in: http://www.csse.monash.edu.au/~lloyd/tildeAlgDS/Dynamic/E dit/.

In addition, the extraction of a subset of data at the server side as well as the integration of a transmitted subset of data in the mirrored data representation requires much computing power. Such as process is for example disclosed in the US Patent Application 2005/0246389 A1 which relates to method for client server synchronization of data across a communication network.

It is an object of present invention to improve data synchronization between a server and a client across a communication network.

This object is achieved according to the invention by a method for client server synchronization of data across a communication network comprising the steps of:
a) carrying out at least one program application at at least one client work machine,
b) hosting at least one data representation at the server (S), said data representation consists of a sequence of data packages, said data packages are source code constructions, such as objects, classes, methods, routines, being constructed from data portions,
characterized by the following steps:
c) modifying at least one data portion in the data representation while the program application is carried out at the client work machine,
d) detecting said modified data portion in the data representation at the server by means of data reflection and adding a specific attribute to said modified data portion, said specific attribute signaling that these data portions being monitored by a synchronization tool,
e) generating a copy of at least one data package (3') comprising said modified data portion and the specific attribute,
f) reading the specific attribute and automatically including in the software code a set of checking points; said checking point being new automatically generated code portions which are inoculated in each part of original software code that modifies the monitored data portions and transmitting said copied data package from the server across the communication network to the client work machine, and
g) integrating said copied data package in at least one mirrored data representation at the client work machine,
h) whereby a pre-defined library is provided being linked to the new automatically generated code for tracking the list of modified data packages and for transmitting the modified data packages over the network and providing a server-sided tool and library to reconstruct the data representation on the client work machine on the basis of the received modified data packages.

It is an advantage of the invention that the data representation consists of a sequence of data packages. Each data package comprises at least one data portion, such that a modified data portion remains confined to one data package. Only a copy of a data package comprising a modified data portion must be created at the server, this copy must be transmitted to the client work machine and integrated in the mirrored data representation at the client work machine. The handling of data packages is fast and requires few computing power. Therefore, the present invention allow to realize this efficient synchronization method for a generic software application without having the burden to write dedicated software code for each new data structure to be synchronized across network.

Preferably, a modified data portion is easily detectable by serial comparison of data portions corresponding to a command to be actually executed at the client work machine with data portions of the mirrored data representation. This serial comparison can be performed at the server by storing not only the actual data representation at the server but by storing also a copy of the mirrored data representation at the server.

Furthermore, a computer program element can be provided, comprising computer program code for performing steps according to the above mentioned method when loaded in a digital processor of a computing device.

Additionally, a computer program product stored on a computer usable medium can be provided, comprising computer readable program code for causing a computing device to perform the mentioned method.

### Brief description of the drawings

Preferred examples of the invention are described hereinafter with reference to the figures:
- Fig. 1: is a schematic representation of the detection of a modified data portion of a data package at the server,
- Fig. 2: is a schematic representation of the comparison workflow for the detection of a modified data portion according to Fig. 1,
- Fig. 3: is a schematic representation of the copying of a data package comprising a modified data portion according to Fig. 1 or 2, and
- Fig. 4: is a schematic representation of the transmission from the server to a remote client work machine of a copied data package comprising a modified data portion according to Fig. 3, and
- Fig. 5: is a schematic representation of the integration of a transmitted data package comprising a modified data portion according to Fig. 4 at the client work machine.

### Ways for implementing the invention

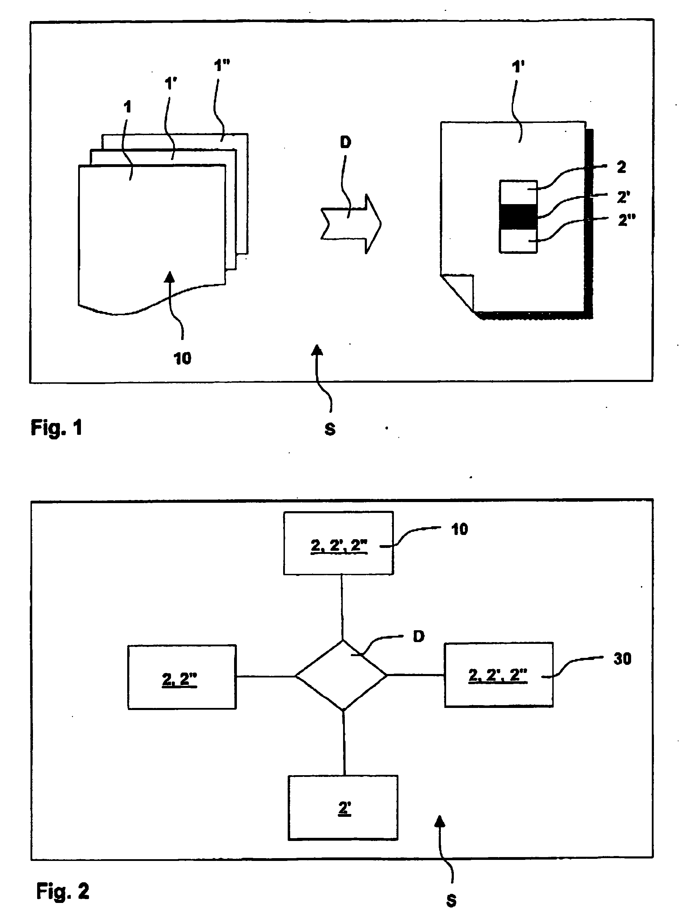

The Figs. 1 to 5 show parts of a manufacturing execution system, with at least one server S and a plurality of client work machines C which are linked for data synchronization purposes across a communication network. The server S controls the manufacturing workflow in such a way that manufacturing changes are realized by modification of the program applications executed at the client work machines C. For the sake of simplicity, in the following only one server S and one client work machine C are shown.

The server S and the client work machine C comprise at least one computer with at least one processor, at least one memory and input/output devices for enabling a communication across a communication network. The computers are managed by an operating system. The communication network may be a standard telecommunication network enabling communication by means of a standard network protocol like the Internet Protocol.

Referring now to Fig.1, in order to respond to manufacturing changes the server S is able to modify a program application that is hosted in the server S. The program application consists of a data representation 10 which may be stored in a memory and updated. The data representation 10 consists of a sequence of data packages 1, 1', 1". The data packages 1, 1', 1" are source code constructions such as objects, classes, methods, routines, etc.. The data packages 1, 1', 1" are constructed from data portions 2, 2', 2". The data portions 2, 2', 2" are more elementary source code constructions than the data packages 1, 1', 1''. For the sake of clarity, only three data packages 1, 1', 1'' and only data portions 2, 2', 2'' are shown.

The program application is executable at the client work machine C. For doing so, the data representation 10 is mirrored from the server S across the communication network to the client work machine C. The mirrored data representation 30 at the client work machine C may be stored in a memory and updated. Before execution at the client work machine C, the data representation 30 is translated in a machine code instruction of the program application.

The server S may modify the program application by modifying a data portion 2, 2', 2" within a data package 1, 1', 1" or by modifying entire data packages 2, 2', 2". According to the example of Fig. 1, a data portion 2' of data package 1' is modified while the data portions 2 and 2" of data package 1' are not modified. Modification of the data representation 10 may also occur through reflection. Reflection allows an actually executed program application to dynamically determine features like the name of objects, classes, methods, routines within the data representation 10. These features may be used to modify data portions 2, 2', 2". Reflection is possible in higher level program languages like Java, Microsoft.NET etc.

Under these circumstances the role of reflection in this invention can be considered to be even larger than just data modification. By using reflection and related features such as software meta-information (also called attributes), the invention provides a system for automatically detecting changes in the server-side mirrored data structures and automatically generating the data packages to be sent to the client. Therefore, the usage of the invention solution will require to "mark" the data structures to be synchronized between client and server side with specific attributes. The attributes signal that these parts of data must be monitored by the synchronization tool. The inventive solution, by means of software code reflection, reads these attributes and automatically includes in the software code a set of checking points for detecting each change actions that is applied to the monitored data structure. These checking points are new, automatically generated code portions, which are inoculated in each part of original software code that modifies the monitored data structures. Furthermore, the provided solution includes a pre-defined library, which is linked to the automatically generated code, for tracking the list of modified data packages and for transmitting them over network. Finally, a tool and library, which are similar to the server side tool and library, are provided in order to reconstruct the data structures on the client side on the basis of the received data packages.

Detection D of a modified data portion 2' is possible through serial comparison of data portions 2, 2', 2" corresponding to a command to be actually executed at the client work machine C with data portions 2, 2', 2'' of the mirrored data representation 30. As shown in Fig. 2, this serial comparison can be performed at the server S by storing not only the actual data representation 10 at the server S but by storing also a copy of the mirrored data representation 30 at the server S. Serial comparison means that one data portion 2, 2', 2" after the other of the actual data representation 10 is compared with data portions 2, 2', 2" of the copy of the mirrored data representation 30. The modified data portion 2' is detected and identified.

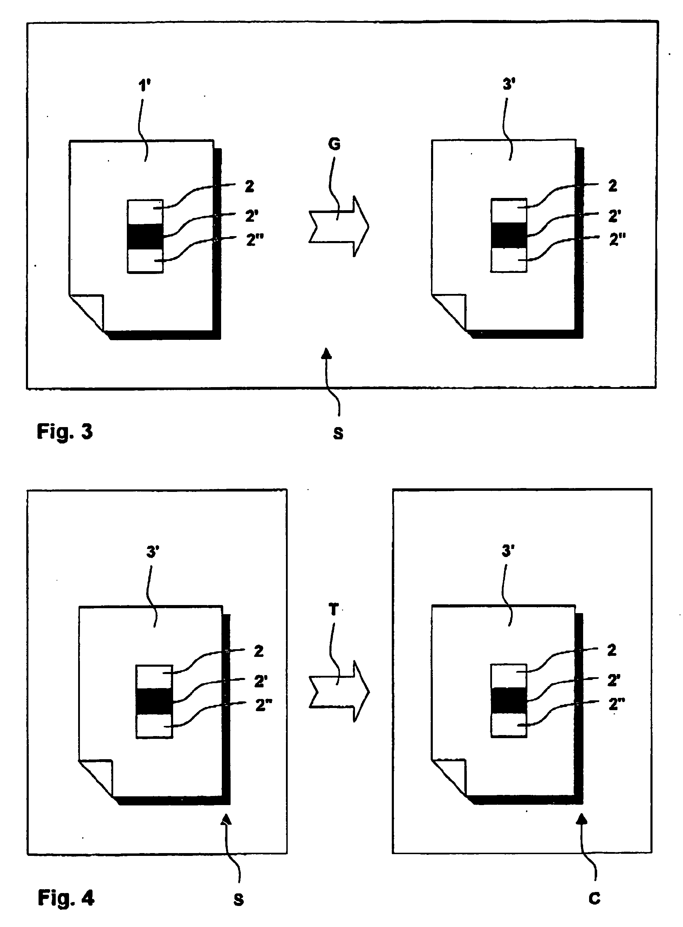

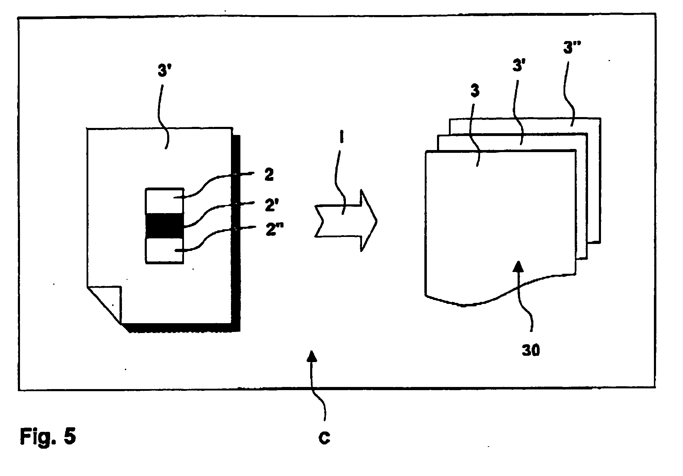

According to Fig. 3, at the server side, the data package 1' comprising the modified data portion 2' is copied G, resulting in a copied data package 3'. As shown in Fig. 4, said copied data package 3' is transmitted from the server S across the communication network to the client work machine C. Referring to Fig. 5, for accomplishing the client server synchronization said copied data package 3' is integrated I in the mirrored data representation 30 at the client work machine C.

## Claims

1. Method for client server synchronization of data across a communication network comprising the steps of:
a) carrying out at least one program application at at least one client work machine (C),
b) hosting at least one data representation (10) at the server (S), said data representation (10) consists of a sequence of data packages (1, 1', 1''), said data packages (1, 1', 1'') are source code constructions, such as objects, classes, methods, routines, being constructed from data portions (2, 2', 2'')
**characterized by** the following steps:
c) modifying at least one data portion (2') in the data representation (10) while the program application is carried out at the client work machine (C),
d) detecting said modified data portion (2') in the data representation (10) at the server (S) by means of data reflection and adding a specific attribute to said modified data portion (2'), said specific attribute signaling that these data portions (2') being monitored by a synchronization tool,
e) generating a copy of at least one data package (3') comprising said modified data portion (2') and the specific attribute,
f) reading the specific attribute and automatically including in the software code a set of checking points; said checking point being new automatically generated code portions which are inoculated in each part of original software code that modifies the monitored data portions (2') and transmitting said copied data package (3') from the server (S) across the communication network to the client work machine (C), and
g) integrating said copied data package (3') in at least one mirrored data representation (30) at the client work machine (C),
h) whereby a pre-defined library is provided being linked to the new automatically generated code for tracking the list of modified data packages and for transmitting the modified data packages over the network and providing a server-sided tool and library to reconstruct the data representation on the client work machine on the basis of the received modified data packages.

2. The method according to claim 1,
wherein a modified data portion (2') is easily detectable by serial comparison of data portions (2, 2', 2'') corresponding to a command to be actually executed at the client work machine (C) with data portions (2, 2', 2'') of the mirrored data representation (30).

3. The method according to claim 2,
wherein said serial comparison is performed at the server (S) by storing not only the actual data representation (10) at the server (S) but by storing also a copy of the mirrored data representation (30) at the server (S).

4. The method according to one of claims 1 to 3,
wherein the detection of data change actions of at least one data portion (2') occurs through reflection.

5. The method according to any of the preceding claims,
wherein automatic generation of data packages to be sent to the client machine is included; thereby defining a synchronization mechanism that has not to be updated each time the set of data to be synchronized changes.

6. Manufacturing execution system with at least one server (S) and a plurality of client work machines (C), said server (S) and client work machines (C) are synchronized by the method according to one of claims 1 to 5
wherein the server (C) controls the manufacturing workflow in such a way that manufacturing changes are realized by modification of the program applications executed at the client work machines (C).

## Patentansprüche

1. Verfahren zur Client-Server-Synchronisation von Daten über ein Kommunikationsnetz, welches die folgenden Schritte umfasst:
a) Ausführen wenigstens einer Programmanwendung auf wenigstens einer Client-Arbeitsmaschine (C),
b) Hosten wenigstens einer Datendarstellung (10) auf dem Server (S), wobei die besagte Datendarstellung (10) aus einer Folge von Datenpaketen (1, 1', 1'') besteht, wobei die besagten Datenpakete (1, 1', 1'') Quellcodekonstruktionen sind, wie etwa Objekte, Klassen, Verfahren, Routinen, die aus Datenabschnitten (2, 2', 2'') konstruiert sind,
**gekennzeichnet durch** die folgenden Schritte:
c) Modifizieren wenigstens eines Datenabschnitts (2') in der Datendarstellung (10), während die Programmanwendung auf der Client-Arbeitsmaschine (C) ausgeführt wird,
d) Detektieren des besagten modifizierten Datenabschnitts (2') in der Datendarstellung (10) auf dem Server (S) mittels Datenspiegelung und Hinzufügen eines spezifischen Attributs zu dem besagten modifizierten Datenabschnitt (2'), wobei das besagte spezifische Attribut signalisiert, dass diese Datenabschnitte (2') von einem Synchronisations-Tool überwacht werden,
e) Erzeugen einer Kopie wenigstens eines Datenpaketes (3'), welches den besagten modifizierten Datenabschnitt (2') und das spezifische Attribut umfasst,
f) Lesen des spezifischen Attributs und automatisches Einfügen einer Menge von Prüfpunkten in den Softwarecode; wobei die besagten Prüfpunkte neue, automatisch erzeugte Codeabschnitte sind, welche in jeden Teil von Original-Softwarecode eingeimpft werden, welcher die überwachten Datenabschnitte (2') modifiziert, und Senden des besagten kopierten Datenpaketes (3') von dem Server (S) über das Kommunikationsnetz zu der Client-Arbeitsmaschine (C), und
g) Integrieren des besagten kopierten Datenpaketes (3') in wenigstens eine gespiegelte Datendarstellung (30) auf der Client-Arbeitsmaschine (C),
h) wobei eine vordefinierte Bibliothek vorgesehen ist, die mit dem neuen, automatisch erzeugten Code verknüpft wird, zum Verfolgen der Liste modifizierter Datenpakete und zum Senden der modifizierten Datenpakete über das Netz und Bereitstellen eines serverseitigen Tools und einer Bibliothek, um die Datendarstellung auf der Client-Arbeitsmaschine auf der Basis der empfangenen modifizierten Datenpakete zu rekonstruieren.

2. Verfahren nach Anspruch 1,
wobei ein modifizierter Datenabschnitt (2') leicht durch seriellen Vergleich von Datenabschnitten (2, 2', 2''), die einem tatsächlich auf der Client-Arbeitsmaschine (C) auszuführenden Befehl entsprechen, mit Datenabschnitten (2, 2', 2'') der gespiegelten Datendarstellung (30) detektierbar ist.

3. Verfahren nach Anspruch 2,
wobei der besagte serielle Vergleich auf dem Server (S) durch Speichern nicht nur der tatsächlichen Datendarstellung (10) auf dem Server (S), sondern durch Speichern auch einer Kopie der gespiegelten Datendarstellung (30) auf dem Server (S) durchgeführt wird.

4. Verfahren nach einem der Ansprüche 1 bis 3,
wobei die Detektion von Datenänderungs-Aktionen wenigstens eines Datenabschnitts (2') durch Spiegelung erfolgt.

5. Verfahren nach einem der vorhergehenden Ansprüche,
wobei eine automatische Erzeugung von an die Client-Maschine zu sendenden Datenpaketen mit enthalten ist; wodurch ein Synchronisationsmechanismus definiert wird, welcher nicht jedes Mal aktualisiert werden muss, wenn sich die Menge der zu synchronisierenden Daten ändert.

6. Manufacturing Execution System mit wenigstens einem Server (S) und einer Vielzahl von Client-Arbeitsmaschinen (C), wobei der besagte Server (S) und die besagten Client-Arbeitsmaschinen (C) durch das Verfahren nach einem der Ansprüche 1 bis 5 synchronisiert sind,
wobei der Server (C) den Fertigungsablauf auf eine solche Weise steuert, dass Fertigungsänderungen durch Modifizierung der Programmanwendungen, die auf den Client-Arbeitsmaschinen (C) ausgeführt werden, realisiert werden.

## Revendications

1. Procédé de synchronisation de données de serveur client sur un réseau de communication, comprenant les stades:
a) on effectue au moins une application de programme à au moins une machine (C) de travail cliente,
b) on reçoit comme hôte au moins une représentation ( 10 ) de données au serveur ( S ), la représentation ( 10 ) de données étant constituée d'une séquence de paquets ( 1, 1', 1'') de données, les paquets ( 1, 1', 1'' ) de données étant des constructions de code source, telles que des objets, des classes, des procédés, des sous-programmes, qui sont construites à partir de parties ( 2, 2', 2'' ) de données,
**caractérisé par** les étapes suivantes :
c) on modifie au moins une partie ( 2' ) de données dans la représentation ( 10 ) de données tandis que l'application de programme est effectuée à la machine ( C ) de travail cliente,
d) on détecte la partie ( 2' ) de données modifiée dans la représentation ( 10 ) de données au serveur ( S ) au moyen de la réflexion de données et on ajoute un attribut spécifique à la partie ( 2' ) de données modifiée, l'attribut spécifique signalant que ces parties ( 2' ) de données sont surveillées par un outil de synchronisation,
e) on produit une copie d'au moins un paquet ( 3' ) de données comportant la partie ( 2' ) de données modifiée et l'attribut spécifique,
f) on lit l'attribut spécifique et on inclut automatiquement dans le code logiciel un ensemble de points de vérification; les points de vérification étant des parties de code nouvelles produites automatiquement qui sont inoculées dans chaque partie de code logiciel initial qui modifie les parties ( 2' ) de données surveillées et on émet le paquet ( 3' ) de données copié du serveur ( S ) sur le réseau de communication vers la machine ( C ) de travail cliente, et
g) on intègre le paquet ( 3' ) de données copié dans au moins une représentation ( 30 ) de données mises en miroir à la machine ( C ) de travail cliente,
h) une bibliothèque prédéfinie étant prévue qui est liée au nouveau code produit automatiquement pour suivre la liste de paquets de données modifiés et pour émettre les paquets de données modifiés sur le réseau et fournir un outil et une bibliothèque du côté du serveur pour reconstruire la représentation de données sur la machine de travail cliente sur la base des paquets de données modifiés reçus.

2. Procédé suivant la revendication 1,
dans lequel une partie ( 2' ) de données modifiée est facilement détectable par une comparaison en série de parties ( 2, 2', 2'' ) de données correspondant à une instruction qui doit être effectivement exécutée à la machine ( C ) de travail cliente avec des parties ( 2, 2', 2'' ) de données de la représentation ( 30 ) de données mises en miroir.

3. Procédé suivant la revendication 2,
dans lequel la comparaison en série est effectuée au serveur ( S ) en mémorisant non seulement la représentation ( 10 ) de données réelle au serveur ( S ) mais aussi en mémorisant également une copie de la représentation ( 30 ) de données mises en miroir au niveau du serveur ( S ).

4. Procédé suivant l'une quelconque des revendications 1 à 3,
dans lequel la détection d'actions de modification de données d'au moins une partie ( 2' ) de données a lieu par réflexion.

5. Procédé suivant l'une quelconque des revendications précédentes,
dans lequel la production automatique de paquets de données à envoyer à la machine de client est incluse ; pour ainsi définir un mécanisme de synchronisation qui n'a pas besoin d'être mis à jour chaque fois que l'ensemble de données destinées à être synchronisées est modifié.

6. Système d'exécution de fabrication avec au moins un serveur ( S ) et une pluralité de machines ( C ) de travail cliente, le serveur ( S ) et les machines ( C ) de travail cliente étant synchronisés par le procédé suivant l'une des revendications 1 à 5,
dans lequel le serveur ( C ) commande le débit de fabrication de telle manière que des variations de fabrication sont effectuées par modification des applications de programme exécutées aux machines ( C ) de travail cliente.
